# EUROPEAN PATENT APPLICATION

(11) **EP 4 459 952 A1**
(43) Date of publication of application: **06.11.2024**
(21) Application number: 21969986.5
(22) Date of filing: 28.12.2021
(51) Int. Cl.: H04L 51/21

(54) **SERVER, SERVICE METHOD, PROGRAM, AND INFORMATION RECORDING MEDIUM**

(71) Applicant: PASSLOGY CO., LTD., Tokyo 101-0051 (JP)
(72) Inventor: OGAWA, Hideharu, Tokyo 101-0051 (JP)
(74) Representative: Epping - Hermann - Fischer
(86) International application number: PCT/JP2021/048811
(87) International publication number: WO 2023/127105

(57) **Abstract**

To enable a user to easily read an electronic mail desirable for the user, regardless of a determination result by a spam email filter. In a server (101), a receiver (102) receives an electronic mail addressed to a user. A classifier (103) classifies an electronic mail into one of classes including first and second classes. A first storer (104) stores a first-class email classified into the first class in a mailbox (111) for reading assigned to the user. An acceptor (105) accepts a permission instruction from the user. A setter (106) sets a permission period including an instruction time when the permission instruction is accepted. An extractor (107) extracts a permitted email received at a reception time within the set permission period from second-class emails classified into the second class. A second storer (108) stores a notice email making a permitted email readable in the mailbox (111) for reading.

## Description

### Technical Field

The present disclosure relates to a server, a service method, a program, and an information recording medium that are suitable for enabling a user to easily read an electronic mail desirable for the user, regardless of a determination result by a spam email filter.

### Background Art

Conventionally, a spam email filtering technology for preventing a user from seeing an electronic mail that the user does not desire to read (sometimes referred to as junk mail, spam email, or the like) by preventing such an electronic mail from being stored in a mailbox for reading for the user to read an electronic mail has been proposed.

Examples of such a spam email filter include a spam email filter that determines whether or not an electronic mail is a spam email, based on a combination of a source and a destination of the electronic mail, as disclosed in Patent Literature 1.

In addition, as disclosed in Patent Literature 2, a spam email filter exists that determines whether or not an electronic mail is a spam email, based on whether or not a universal resource locator (URL) included in a blacklist or a prohibited word is included in a message body of the electronic mail.

When a user performs user registration in order to receive a new service, email address authentication to confirm that an email address of the user exists and the user is able to read an electronic mail addressed to the email address is sometimes performed.

In Patent Literature 3, as a background art, a technology for, in order to prevent multiple account registration by the same person when an account for a Web service is newly created, performing email address authentication by sending a confirmation email to an email address that a new user inputs and causing the new user to click on a URL described in the confirmation email is disclosed.

### Citation List

### Patent Literature

Patent Literature 1: Japanese Patent No. 4548914
Patent Literature 2: Japanese Patent No. 4500285
Patent Literature 3: Unexamined Japanese Patent Application Publication No. 2014-186697

### Summary of Invention

### Technical Problem

However, a source of a confirmation email used in the email address authentication is an email address that the user encounters for the first time, and a URL that the user encounters for the first time is included in a message body of the confirmation email in most cases. Therefore, an event where a confirmation email is filtered out due to a false recognition by the spam email filter and is not stored in a mailbox for reading often occurs.

When such an event occurs, the user is required to put effort into confirming emails in a spam folder in which a spam email is temporarily stored, searching for a confirmation email, and causing a spam email filter to learn that the confirmation email is not a spam email.

However, such an operation takes a lot of work for the user. In addition, since a spam email contains an inappropriate content, psychological burden for the user to confirm emails in the spam folder is large.

Therefore, a technology for making reading of an electronic mail desirable for the user, such as a confirmation email, easier for the user and preventing psychological burden from falling on the user is strongly demanded.

The present disclosure has been made to solve the above-described problem, and an objective of the present disclosure is to provide a server, a service method, a program, and an information recording medium that are suitable for enabling a user to easily read an electronic mail desirable for the user, regardless of a determination result by a spam email filter.

### Solution to Problem

A server according to the present disclosure:
receives an electronic mail addressed to a user;
classifies the received electronic mail into one of a plurality of classes including a first class and a second class;
stores a first-class email that is classified into the first class among the received electronic mails in a mailbox for reading assigned to the user;
accepts a permission instruction from the user;
sets a permission period including an instruction time at which the permission instruction is accepted;
extracts a permitted email that is received at a reception time within the set permission period from second-class emails that are classified into the second class among the received electronic mails; and
stores a notice email to make the extracted permitted email readable in the mailbox for reading.

### Advantageous Effects of Invention

According to the present disclosure, a server, a service method, a program, and an information recording medium that are suitable for enabling a user to easily read an electronic mail desirable for the user, regardless of a determination result by a spam email filter can be provided.

### Brief Description of Drawings

FIG. 1 is an explanatory diagram illustrating a configuration of a server according to an embodiment of the present disclosure.
FIG. 2 is a flowchart describing control processing associated with the server of the present disclosure.

### Description of Embodiments

An embodiment of the present disclosure is described below. Note that the embodiment to be described below is for explaining the present disclosure, not for limiting the scope of the present disclosure. Accordingly, although it is possible for a person skilled in the art to employ embodiments in which part or all of the elements of the embodiments are replaced by equivalents thereof, the embodiments are also included in the scope of the present disclosure.

### Basic Configuration

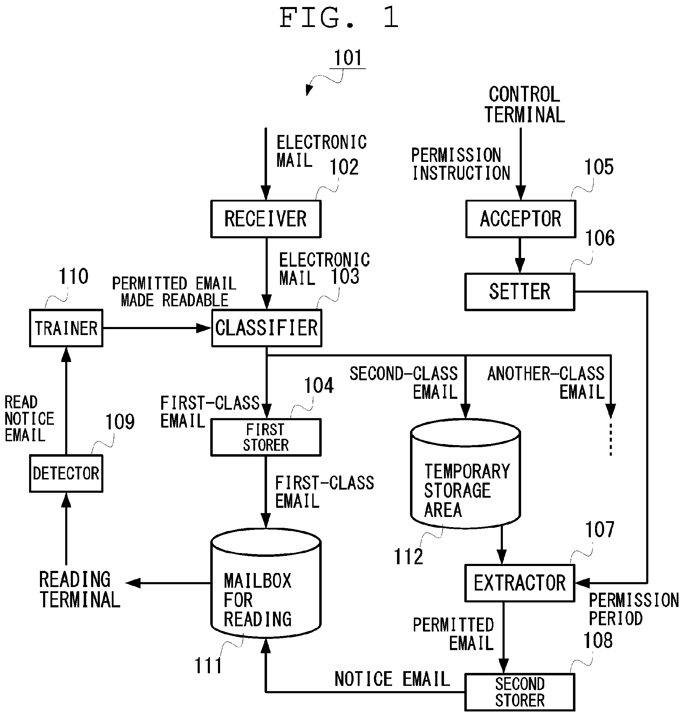

FIG. 1 is an explanatory diagram illustrating a configuration of a server according to an embodiment of the present disclosure. Description below is made with reference to the present drawing.

A server 101 according to the present embodiment can be achieved by executing programs corresponding to functions of the server 101 on hardware of various types of computers.

Typically, as the server 101, a server computer or the like for achieving functions as a spam email filter server, a mail server, a web server, or the like can be used.

In general, a computer retrieves various programs recorded in a non-transitory information recording medium in a random access memory (RAM), which is a temporary storage device, and subsequently a central processing unit (CPU) or a processor executes commands included in the retrieved programs. Note, however, that in an architecture capable of executing processing with a read only memory (ROM) and the RAM mapped into a single memory space, the CPU directly retrieves and executes commands included in programs stored in the ROM. The CPU, the processor, or the like controls devices that the hardware includes, such as a network interface card (NIC), a display, a microphone, and a speaker, in collaboration with the RAM or the like.

The server 101 is connected to a computer communication network, such as the Internet, via the NIC. That is, the server 101 communicates with other various types of servers, such as another mail server and a network storage server, via the NIC. In addition, the server 101 is capable of communicating with a various computer that an end user uses, such as a personal computer, a smartphone, and a mobile terminal, via the NIC.

A program that is executed in a computer in which the server 101 is achieved can be recorded in a non-transitory computer-readable information recording medium, such as a compact disc, a flexible disk, a hard disk, a magneto optical disk, a digital video disk, a magnetic tape, a ROM, an electrically erasable programmable ROM (EEPROM), a flash memory, and a semiconductor memory. The information recording medium can be distributed and sold independently of each piece of hardware.

In addition, it may also be configured such that a program for achieving the server 101 is divided into subprograms with respect to each function, each of the subprograms is appropriately recorded separately in one of a plurality of information recording media, the plurality of information recording media is grouped into a medium set, and the medium set is distributed and sold independently of each piece of hardware.

Further, the above-described program can be distributed to each piece of hardware from a distribution device or the like via a transitory transmission medium, such as a computer communication network, independently of a computer in which the program is executed. For example, when a smartphone is employed as a computer, the program can be distributed and sold at an application store for a smartphone.

Note that the above-described program can be described using a programming language for description at a level of electronic circuit operations. In this case, various types of design drawings, such as a wiring diagram and a timing chart, of an electronic circuit are generated from the above-described program, and based on the design drawings, an electronic circuit constituting the above-described image processing device can be constructed. For example, not only can the above-described image processing device be configured in hardware that is reprogrammable by a field programmable gate array (FPGA) technology, from the above-described program but also an electronic circuit dedicated for a specific use can be configured using an application specific integrated circuit (ASIC) technology.

In this case, each part of the server 101 is configured to execute processing that is assigned to the part. Each part of the server 101 is described below.

As illustrated in the present drawing, the server 101 includes a receiver 102, a classifier 103, a first storer 104, an acceptor 105, a setter 106, an extractor 107, and a second storer 108. The server 101 can also include a detector 109 and a trainer 110 as an optional element.

In this configuration, the receiver 102 receives an electronic mail addressed to a user. That is, when a destination of an electronic mail is a user associated with an email address managed by the server 101, the receiver 102 receives the electronic mail. Note that when the destination of an electronic mail is not a user associated with an email address managed by the server 101, the receiver 102 may send the source of the electronic mail a reply to the effect that no user associated with the destination is included in the users having email addresses managed by the server 101, may transfer the electronic mail to another mail server that manages the destination, or may ignore the electronic mail.

On the other hand, the classifier 103 classifies a received electronic mail into one of a plurality of classes including a first class and a second class.

In an email filtering technology at present, an electronic mail is often classified into the following three types of classes.
(a) A class where an electronic mail is not a spam email. This class corresponds to the above-described "first class".
(b) A class where an electronic mail has a possibility to be a spam email. This class corresponds to the above-described "second class".
(c) A class where an electronic mail is a spam email with substantial certainty. An electronic mail is classified into this class when, for example, a character string that is registered in a prohibition list since the character string indicates an unsafe URL or email address is included in the electronic mail. This class corresponds to a "third class", which is described below.

For example, the classifier 103 classifies an electronic mail as described below.

First, when in a received electronic mail, a character string registered in the prohibition list is included, the classifier 103 directly classifies the electronic mail into the third class.

Next, the classifier 103 calculates a score representing a degree of whether or not an electronic mail that is not classified into the third class is a spam email, and classifies, based on magnitude comparison between the score and a threshold value, the electronic mail into either the first class or the second class. To the calculation, various classification technologies, such as machine learning and deep learning, can be applied.

In addition, when a scalar value is used as the score, it is assumed that the score represents probability or a likelihood of whether or not the electronic mail is a spam email.

Note, however, that a vector value can also be employed as the score. In this case, a plane or a curved surface that divides the vector space into two regions is learned, and based on which region the score belongs to, which one of the first class and the second class the electronic mail is classified into can be determined.

Next, the first storer 104 stores a first-class email that is classified into the first class among received electronic mail in a mailbox 111 for reading assigned to the user.

When the server 101 functions as a mail server, such as a POP server and an IMAP server, the mailbox 111 for reading corresponds to a reception folder assigned to the user.

On the other hand, when the server 101 functions as a spam email filtering server, the mailbox 111 for reading is prepared in another mail server that is different from the server 101, and when an electronic mail is classified into the first class, the first storer 104 transfers the electronic mail to the another mail server in response to the classification.

On the other hand, the server 101 temporarily retains an electronic mail classified into the second class in a temporary storage area 112 in the server 101 for a certain retention period.

In addition, the server 101 may simply discard an electronic mail classified into the third class, may record the electronic mail for a certain period to enable an administrator or a learning program of a spam email filter to examine a content of the electronic mail, or may send a mail server serving as the source of the electronic mail a notification to the effect that the server 101 refused to receive the electronic mail.

The acceptor 105 accepts a permission instruction from the user. Regarding the permission instruction, it may be configured such that the user explicitly issues a permission instruction, using a reading terminal to read an electronic mail stored in the mailbox 111 for reading, it may be configured such that a permission instruction is automatically issued by the user activating a reading program to read an email and accessing the mailbox 111 for reading, using the reading terminal, or it may be configured such that a permission instruction is transferred from a control terminal, such as a smartphone, that is different from the reading terminal to the server 101, triggered by the user executing a control program in the control terminal.

When a permission instruction is accepted, the setter 106 sets a permission period including an instruction time at which the permission instruction is accepted. Typically, the permission period starts at a time a preceding period before the instruction time and ends at a time a following period after the instruction time. The preceding period and the following period may be set to a fixed time length, such as 5 minutes, or may be configured to be adjusted manually or automatically according to a request or an action of the user, as described later.

The extractor 107 extracts a permitted email that is received at a reception time within the set permission period from second-class emails that are classified into the second class among the received electronic mails.

For this purpose, the retention period for which a second-class email is retained in the server 101 is desirably set in such a manner as to be longer than period length of the permission period.

As described above, in this mode of embodiment, when no permission period including a reception time at which a second-class email is received is set, the server 101 temporarily keeps the second-class email only for the retention period and, after the retention period has elapsed, deletes the second-class email.

In addition, since when a permission period is newly set, a second-class email that has been temporarily kept and was received at a reception time within the newly set permission period is extracted as a permitted email and stored in the mailbox 111 for reading, the server 101 can delete the second-class email from the temporary keeping/storage area.

Finally, the second storer 108 stores a notice email to make a permitted email readable in the mailbox 111 for reading.

In a simplest mode of embodiment, it is assumed that the notice email has the same content as the permitted email. In this mode of embodiment, a second-class email extracted as a permitted email is to be stored in the mailbox 111 for reading as it is. Another mode of embodiment is described later.

Therefore, even when an electronic mail is a second-class email that the server 101 received at and before an instruction time at which the user issued a permission instruction, the second-class email is extracted as a permitted email when the reception time of the second-class email is a time at and after "a time a preceding period before the instruction time", and a notice email to make the permitted email readable is to be moved to the mailbox 111 for reading.

In addition, at and after the instruction time at which the user issued the permission instruction, a second-class email that the server 101 receives is extracted as a permitted email until the following period has elapsed, and a notice email to make the permitted email readable is to be moved to the mailbox 111 for reading.

Therefore, in a mode in which when a user performs user registration in order to receive a new service, a confirmation email is sent to the user, when the user issues a permission instruction, using a control terminal, such as a smartphone, at a timing of user registration, the user can certainly read the confirmation email in the mailbox 111 for reading, regardless of a determination result by the spam email filter.

In addition, since outside the permission period, no second-class email is stored in the mailbox 111 for reading, a risk of unintentionally reading a spam email can be reduced.

### (Notice Email)

It may also be configured such that instead of using a permitted email as a notice email as it is, only a portion of the permitted email, such as a title, a sender, and an opening sentence of a message body, is contained in the notice email and the permitted email can be read by way of the notice email.

For example, when a hypertext markup language (HTML) email is employed as a notice email, an HTML tag or a script to detect the fact that the user has read the notice email can be embedded in the notice email.

In this mode, when the user, after confirming a title and the like of a permitted email in a list of senders and titles of received emails, selects the permitted email and reads the message body of the permitted email, using the reading terminal, a notification to the effect that the notice email has been read by the user is sent from the reading terminal to the server 101.

Then, the server 101 stores a permitted email associated with the read notice email in the mailbox 111 for reading.

Subsequently, when the user updates a list of received emails, using the reading terminal, the permitted email is added to the list and the message body of the permitted email becomes readable.

Alternatively, the server 101 may generate a temporary URL that is accessible from the user, at random, associate the permitted email with the URL and contain the URL in a notice email, and make the URL publicly accessible until a permission period expires. The user can confirm a content of the permitted email via the URL contained in the notice email, using a browser.

When a permitted email and a notice email are caused to include different contents in this way, the user can, by glancing over a summary indicated in the notice email, determine whether or not the permitted email is a desirable email, before reading the message body of the permitted email.

In addition, triggered by the user reading a notice email or the user reading a content of a permitted email via a notice email, the server 101 is enabled to detect the fact that the permitted email associated with the notice email is a desirable email for the user.

Although the classifier 103 of the server 101 is capable of classifying an electronic mail, using a trained model prepared in advance, the classifier 103 is also capable of further advancing learning by making use of the above-described information. This mode of embodiment is described below. Note that the following mode of learning by the spam email filter can be appropriately omitted.

### (Learning by Spam email Filter)

The detector 109 of the server 101 detects that a notice email has been read. For the detection, the above-described function can be used.

A notice email having been read means that a permitted email that is made readable via the notice email should have been classified into the first class. Thus, the trainer 110 causes the classifier 103 to learn the fact.

According to the mode of embodiment, the server 101 becomes capable of further advancing the learning by a model in the classifier 103 according to an action of the user.

The model may be configured to perform learning, using a technology, such as machine learning and deep learning, based on a distribution of terms that appear in the titles and the message bodies of emails and that are described by a natural language or the like.

Alternatively, in a mode of embodiment in which electronic mails are classified by a method of classifying an electronic mail the source domain of which is included in a permission list as a first-class email, the permission list can be automatically updated in the following manner.

In the simplest way, the trainer 110 adds the source domain of a permitted email that is made readable via a read notice email to the permission list.

When the permission list is set on a user-by-user basis, an electronic mail sent from a service provided from the source domain to the user when the user uses the service in the future is classified as a first-class email. Therefore, an electronic mail associated with the service is never incorrectly determined to be a spam email and overlooked.

In addition, the permission list can also be shared by all users of the server 101. In this case, determination by the classifier 103 can be adjusted according to the number of users who permit the source domain.

### (Email Address Different for Each Service)

In preparation for a case where a user register is leaked from a service being used by the user, the user can employ an email address different for each service. In this mode of embodiment, a plurality of addresses managed by the server is associated with a user.

For example, this mode of embodiment is a mode in which by removing alphanumeric characters at and after "-" appearing last within a user name portion of an email address, a representative email address of a user who uses the email address is obtained.

That is, the mode of embodiment is a mode in which when a representative email address of a user is "user@example.com", the user can receive an email addressed to email addresses, such as
user@example.com,
user-123 @ example.com,
user-abc @ example.com,
user-movieXXX @ example.com,
user-shopAAA@example.com, and
user-shopBBB @ example.com.

In the above-described example, when a character string pattern "alphanumeric characters at and after "-" that appear before " @ "" is removed from the email addresses, the representative email address identifying the user is obtained.

In the mode of embodiment, the user is only required to, by appending a service name of a service with which the user is to register as a user, as an optional character string, such as "movieXXX", "shopAAA", and "shopBBB", following "-" to the end of the user name in the representative email address of the user, generate an email address for the service by himself/herself and input the generated email address at the time of user registration.

In the mode of embodiment, combinations of sources and destinations of emails can be employed as the permission list.

That is, the trainer 110 adds a combination of a destination address and a source domain of a permitted email that is made readable via a read notice email to the permission list.

On the other hand, the classifier 103 classifies a received electronic mail into the first class when a combination of the destination address and the source domain of the received electronic mail is included in the permission list.

In the mode of embodiment, even when the user register is leaked, it is possible to find from which service the user register is leaked by seeing an optional character string in the email address. Further, since when a leaked email address is removed from the permission list and added to a blacklist, an email addressed to the leaked email address is classified as a third-class email, it becomes unnecessary for the user to read a high-risk electronic mail.

Although in the above-described mode of embodiment, alphanumeric characters preceding "@" and following the last "-" in an email address were employed as an optional character string pattern, an arbitrary pattern can be employed as long as a representative email address can be restored by removing a character string corresponding to the pattern.

For example, alphanumeric characters appearing following " @ " and reaching the first"." may also be used as an optional character string. For example, a method of adding an optional character string to the domain name side, such as generating, based on
user@example.com,
   email addresses, such as
user@123.example.com,
user@abc.example.com,
user@movieXXX.example.com,
user@shopAAA.example.com, and
user@shopBBB.example.com,
   may be employed.

In the mode of embodiment, the server 101 sets domains including an optional character string as described above in the domain name system (DNS).

Note that a method of preparing (10+26)⁴=1679616 character strings from "0000" to "zzzz" as candidate character strings for the optional character string in advance may also be applicable. Length of each candidate character string and types of characters usable for each candidate character string can be arbitrarily changed as long as the character string can be used as a portion of a user name or a domain name.

In this method, the user selects a character string from among candidate character strings having been prepared in advance, for example, at random and uses the selected character string by adding the character string to a representative user name of the user or the domain name of the server 101. In the mode of embodiment, an email address for a service becomes less likely to be inferred by a third party.

In addition to the above-described various modes of embodiment, a mode of embodiment in which when the control terminal is used as a password reminder or a one-time password display device, at the time of registering a new service, the control program selects an email address that the user is required to use for the service from among candidates, proposes a fixed password for the service to the user, or automatically generates a password that changes depending on a date and time and proposes the password to the user can also be employed.

### (Learning of Permission Period)

Although as the preceding period and the following period, fixed values can be employed as described above, the preceding period and the following period can also be learned in an adaptive manner as described below.

First, the preceding period can be updated according to an elapsed time from a reception time at which a permitted email that is made readable via a read notice email is received to an instruction time.

For example, when the instruction time is later than the reception time of the permitted email itself, a weighted average of a current preceding period and "time length from the reception time to the instruction time" (multiplied by a constant of 1 or more) may be calculated and the calculated weighted average may be used as a new preceding period.

In addition, when the instruction time is earlier than the reception time of the permitted email itself, a weighted average of a current following period and "time length from the instruction time to the reception time" (multiplied by a constant of 1 or more) may be calculated and the calculated weighted average may be used as a new following period.

### (Flow of Control)

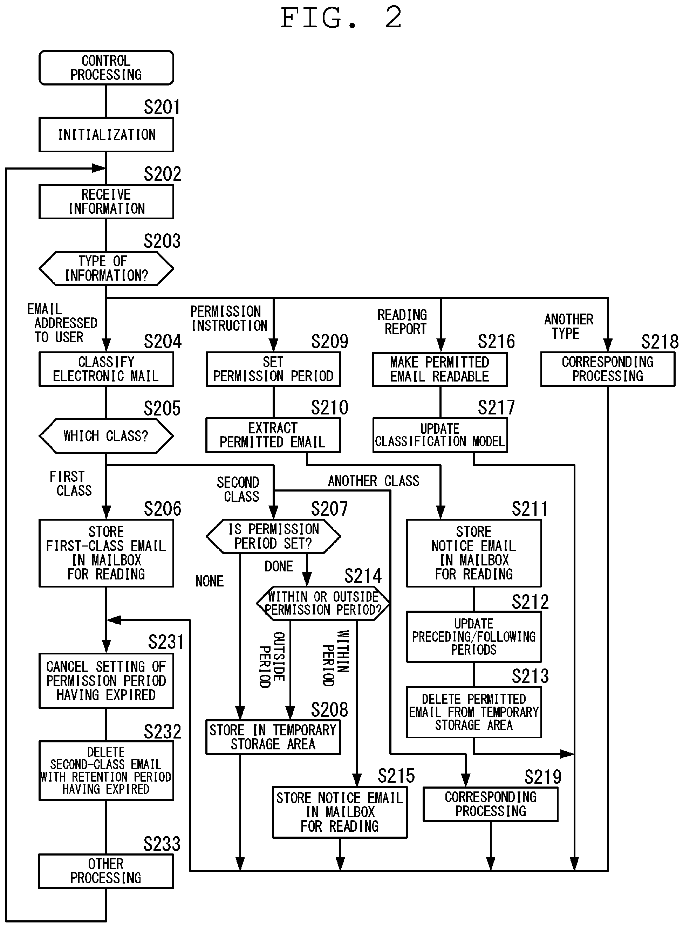

FIG. 2 is a flowchart describing control processing associated with the server of the present disclosure. Description is made below with reference to the present drawing.

When the present processing is started, first, the server 101 performs initialization for a transmission and reception service of an electronic mail and an email filtering service (step S201).

Next, the server 101 receives various information transmitted from other devices (step S202).

Then, the server 101 examines a type of received information (step S203). When the received information is an electronic mail addressed to an email address of a user managed by the server 101 (step S203; an email addressed to a user), the server 101 classifies the electronic mail into one of a plurality of classes (step S204).

When the electronic mail is a first-class email that is classified into the first class (step S205; the first class), the server 101 stores the first-class email in a mailbox 111 for reading of a user associated with a destination email address of the first-class email (step S206) and proceeds to step S231.

When the electronic mail is a second-class email that is classified into the second class (step S205; the second class), the server 101 examines whether or not a permission period is set with respect to a user associated with a destination email address of the second-class email (step S207).

When no permission period is set (step S207; none), the server 101 records the second-class email in the temporary storage area 112 in the server 101 (step S208) and proceeds to step S231.

When the received information is a permission instruction (step S203; a permission instruction), the server 101 sets, based on current settings of the preceding period and the following period and an instruction time at which a permission instruction is received, a permission period with respect to a user associated with the permission instruction (step S209).

Next, the server 101 extracts, among second-class emails recorded in the temporary storage area 112, a permitted email that is addressed to an email address assigned to the user associated with the permission instruction and that is received within the set permission period (step S210).

Then, the server 101 stores a notice email associated with the extracted permitted email in a mailbox 111 for reading of the user associated with the permission instruction (step S211). In this processing, in the case where the permitted email is not directly used as a notice email, when a notice email is generated, the permitted email associated with the notice email is required to be also temporarily recorded in an area separate from the temporary storage area 112.

Then, the server 101 updates the preceding period and the following period according to a difference between the reception time of the extracted electronic mail and the instruction time at which the permission instruction is received (step S212), deletes the extracted permitted email from the temporary storage area 112 (step S213), and proceeds to step S231.

When a permission period is set with respect to the user associated with the destination email address of the second-class email (step S207; done) and the current time falls outside the permission period (step S214; outside the period), the server 101 proceeds to step S208.

On the other hand, when the current time falls within the permission period (step S214; within the period), the server 101 sets the second-class email as a permitted email and stores a notice email associated with the permitted email in a mailbox 111 for reading of the user associated with the destination email address of the second-class email (step S215), and proceeds to step S231.

In addition, when the electronic mail is classified into another class, such as the third class (step S205; another class), the server 101 appropriately executes corresponding processing (step S219) and proceeds to step S231.

When the received information is a report to the effect that any notice email is read (step S203; reading report), the server 101 executes processing of making readable a permitted email associated with the notice email (step S216). Note that in the mode of embodiment in which a permitted email is stored in a mailbox 111 for reading as a notice email as it is, this step can be omitted.

In addition, in the mode of embodiment in which a notice email is prepared separately from a permitted email, the permitted email is to be stored in a mailbox 111 for reading.

Alternatively, in the mode of embodiment in which a permitted email is made readable using a browser, it is only required to perform a setting that makes the permitted email readable for a certain period, in this step.

Next, the server 101 updates, based on the permitted email associated with the notice email, a model that classifies an electronic mail (step S217), and proceeds to step S231.

In addition, when received information is another type of information (step S203; another type), the server 101 executes corresponding processing (step S218) and proceeds to step S231.

The server 101 cancels a setting of a permission period the period of which has expired among currently set permission periods (step S231), deletes a second-class email the retention period of which has expired from the temporary storage area 112 (step S232), executes other processing that is to be intermittently executed (step S233), and subsequently returns control to step S202.

The above-described control can be appropriately subjected to addition, removal, or change of processing according to various modes of embodiment described above.

### (Summary)

As described in the foregoing, a server according to the present embodiment includes:
a receiver to receive an electronic mail addressed to a user;
a classifier to classify the received electronic mail into one of a plurality of classes including a first class and a second class;
a first storer to store a first-class email that is classified into the first class among the received electronic mails in a mailbox for reading assigned to the user;
an acceptor to accept a permission instruction from the user;
a setter to set a permission period including an instruction time at which the permission instruction is accepted;
an extractor to extract a permitted email that is received at a reception time within the set permission period from second-class emails that are classified into the second class among the received electronic mails during the set permission period; and
a second storer to store a notice email to make the extracted permitted email readable in the mailbox for reading.

In addition, the server according to the above-described embodiment can be configured such that
the permission period starts at a time a preceding period before the instruction time and ends at a time a following period after the instruction time.

In addition, the server according to the above-described embodiment can be configured such that
the preceding period is updated according to an elapsed time from the reception time at which a permitted email that is, when the notice email is read, made readable via the read notice email is received to the instruction time.

In addition, the server according to the present embodiment can be configured such that
the following period is updated according to an elapsed time from the instruction time to a reading time at which the notice email is read.

In addition, the server according to the present embodiment can be configured such that
when no permission period including a reception time at which the second-class email is received is set, the second-class email is temporarily kept, and
when the permission period is newly set, the second-class email that has been temporarily kept and is received at a reception time within the newly set permission period is extracted as the permitted email.

In addition, the server according to the present embodiment can be configured such that
by the user executing a control program in a control terminal, the permission instruction is transmitted from the control terminal to the server.

In addition, the server according to the present embodiment can be configured such that
for the user to read an electronic mail stored in the mailbox for reading, using a reading terminal, the control program is required to be executed in the control terminal.

In addition, the server according to the present embodiment can be configured such that
the notice email has a same content as the permitted email.

In addition, the server according to the present embodiment can be configured to further include:
a detector to detect that the notice email is read; and
a trainer to cause the classifier to learn a fact that a permitted email that is made readable via the read notice email has to be classified into the first class.

In addition, the server according to the present embodiment can be configured such that
the notice email is a hypertext markup language (HTML) email, and
when the notice email is read using a reading terminal, a notification to an effect that the notice email is read is sent from the reading terminal to the server.

In addition, the server according to the present embodiment can be configured such that
the notice email includes a universal resource locator (URL) to read the permitted email, using a browser in a reading terminal, and
when the URL is accessed using the browser in the reading terminal, a notification to an effect that the notice email is read is sent from the reading terminal to the server.

In addition, the server according to the present embodiment can be configured to further include:
a detector to detect that the notice email is read; and
a third storer to, when the notice email being read is detected, store the permitted email in the mailbox for reading.

In addition, the server according to the present embodiment can be configured such that
the classifier classifies the received electronic mail into the first class when a source domain of the received electronic mail is included in a permission list, and
the trainer adds a source domain of a permitted email that is made readable via the read notice email to the permission list.

In addition, the server according to the present embodiment can be configured such that
a plurality of addresses managed by the server is associated with the user,
the server identifies the user associated with a destination address of the received electronic mail,
the classifier classifies the received electronic mail into the first class when a combination of a destination address and a source domain of the received electronic mail is included in a permission list, and
the trainer adds a combination of a destination address and a source domain of a permitted email that is made readable via the read notice email to the permission list.

In addition, the server according to the present embodiment can be configured such that
when an optional character string in a predetermined pattern is removed from user names or domain names of a plurality of addresses associated with the user, a main character string identifying the user is obtained.

In addition, the server according to the present embodiment can be configured such that
the plurality of classes further includes a third class, and
a third-class email classified into the third class among the received electronic mail is discarded or refused to be received.

In addition, the server according to the present embodiment can be configured such that
the mailbox for reading is prepared in a mail server different from the server.

A service method according to the present embodiment includes:
a reception step of receiving, by a server, an electronic mail addressed to a user;
a classification step of classifying, by the server, the received electronic mail into one of a plurality of classes including a first class and a second class;
a first storage step of storing, by the server, a first-class email that is classified into the first class among the received electronic mails in a mailbox for reading assigned to the user;
an acceptance step of accepting, by the server, a permission instruction from the user;
a setting step of setting, by the server, a permission period including an instruction time at which the permission instruction is accepted;
an extraction step of extracting, by the server, a permitted email that is received at a reception time within the set permission period from second-class emails that are classified into the second class among the received electronic mails during the set permission period; and
a second storage step of storing, by the server, a notice email to make the extracted permitted email readable in the mailbox for reading.

A program according to the present embodiment causes a computer to function as:
a receiver to receive an electronic mail addressed to a user;
a classifier to classify the received electronic mail into one of a plurality of classes including a first class and a second class;
a first storer to store a first-class email that is classified into the first class among the received electronic mails in a mailbox for reading assigned to the user;
an acceptor to accept a permission instruction from the user;
a setter to set a permission period including an instruction time at which the permission instruction is accepted;
an extractor to extract a permitted email that is received at a reception time within the set permission period from second-class emails that are classified into the second class among the received electronic mails during the set permission period; and
a second storer to store a notice email to make the extracted permitted email readable in the mailbox for reading.

A non-transitory computer-readable information recording medium according to the present embodiment records the above-described program.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

According to the present disclosure, a server, a service method, a program, and an information recording medium that are suitable for enabling a user to easily read an electronic mail desirable for the user, regardless of a determination result by a spam email filter can be provided.

### Reference Signs List

101 Server
102 Receiver
103 Classifier
104 First storer
105 Acceptor
106 Setter
107 Extractor
108 Second storer
109 Detector
110 Trainer
111 Mailbox for reading
112 Temporary storage area

## Claims

1. A server, comprising:
a receiver to receive an electronic mail addressed to a user;
a classifier to classify the received electronic mail into one of a plurality of classes including a first class and a second class;
a first storer to store a first-class email that is classified into the first class among the received electronic mails in a mailbox for reading assigned to the user;
an acceptor to accept a permission instruction from the user;
a setter to set a permission period including an instruction time at which the permission instruction is accepted;
an extractor to extract a permitted email that is received at a reception time within the set permission period from second-class emails that are classified into the second class among the received electronic mails during the set permission period; and
a second storer to store a notice email to make the extracted permitted email readable in the mailbox for reading.

2. The server according to claim 1, wherein the permission period starts at a time a preceding period before the instruction time and ends at a time a following period after the instruction time.

3. The server according to claim 2, wherein the preceding period is updated according to an elapsed time from the reception time at which a permitted email that is, when the notice email is read, made readable via the read notice email is received to the instruction time.

4. The server according to claim 2, wherein the following period is updated according to an elapsed time from the instruction time to a reading time at which the notice email is read.

5. The server according to claim 1, wherein
when no permission period including a reception time at which the second-class email is received is set, the second-class email is temporarily kept, and
when the permission period is newly set, the second-class email that has been temporarily kept and is received at a reception time within the newly set permission period is extracted as the permitted email.

6. The server according to claim 1, wherein by the user executing a control program in a control terminal, the permission instruction is transmitted from the control terminal to the server.

7. The server according to claim 6, wherein for the user to read an electronic mail stored in the mailbox for reading, using a reading terminal, the control program is required to be executed in the control terminal.

8. The server according to claim 1, wherein the notice email has a same content as the permitted email.

9. The server according to claim 1, further comprising:
a detector to detect that the notice email is read; and
a trainer to cause the classifier to learn a fact that a permitted email that is made readable via the read notice email has to be classified into the first class.

10. The server according to claim 9, wherein
the notice email is a hypertext markup language (HTML) email, and
when the notice email is read using a reading terminal, a notification to an effect that the notice email is read is sent from the reading terminal to the server.

11. The server according to claim 9, wherein
the notice email includes a universal resource locator (URL) to read the permitted email, using a browser in a reading terminal, and
when the URL is accessed using the browser in the reading terminal, a notification to an effect that the notice email is read is sent from the reading terminal to the server.

12. The server according to claim 1, further comprising:
a detector to detect that the notice email is read; and
a third storer to, when the notice email being read is detected, store the permitted email in the mailbox for reading.

13. The server according to claim 9, wherein
the classifier classifies the received electronic mail into the first class when a source domain of the received electronic mail is included in a permission list, and
the trainer adds a source domain of a permitted email that is made readable via the read notice email to the permission list.

14. The server according to claim 9, wherein
a plurality of addresses managed by the server is associated with the user,
the server identifies the user associated with a destination address of the received electronic mail,
the classifier classifies the received electronic mail into the first class when a combination of a destination address and a source domain of the received electronic mail is included in a permission list, and
the trainer adds a combination of a destination address and a source domain of a permitted email that is made readable via the read notice email to the permission list.

15. The server according to claim 14, wherein when an optional character string in a predetermined pattern is removed from user names or domain names of a plurality of addresses associated with the user, a main character string identifying the user is obtained.

16. The server according to claim 1, wherein
the plurality of classes further includes a third class, and
a third-class email classified into the third class among the received electronic mails is discarded or refused to be received.

17. The server according to claim 1, wherein the mailbox for reading is prepared in a mail server different from the server.

18. A service method, comprising:
a reception step of receiving, by a server, an electronic mail addressed to a user;
a classification step of classifying, by the server, the received electronic mail into one of a plurality of classes including a first class and a second class;
a first storage step of storing, by the server, a first-class email that is classified into the first class among the received electronic mails in a mailbox for reading assigned to the user;
an acceptance step of accepting, by the server, a permission instruction from the user;
a setting step of setting, by the server, a permission period including an instruction time at which the permission instruction is accepted;
an extraction step of extracting, by the server, a permitted email that is received at a reception time within the set permission period from second-class emails that are classified into the second class among the received electronic mails during the set permission period; and
a second storage step of storing, by the server, a notice email to make the extracted permitted email readable in the mailbox for reading.

19. A program for causing a computer to function as:
a receiver to receive an electronic mail addressed to a user;
a classifier to classify the received electronic mail into one of a plurality of classes including a first class and a second class;
a first storer to store a first-class email that is classified into the first class among the received electronic mails in a mailbox for reading assigned to the user;
an acceptor to accept a permission instruction from the user;
a setter to set a permission period including an instruction time at which the permission instruction is accepted;
an extractor to extract a permitted email that is received at a reception time within the set permission period from second-class emails that are classified into the second class among the received electronic mails during the set permission period; and
a second storer to store a notice email to make the extracted permitted email readable in the mailbox for reading.

20. A non-transitory computer-readable information recording medium recording the program according to claim 19.
